Europäisches Patentamt

European Patent Office

Office européen des brevets

(19)

(11) Numéro de publication: **0 146 475**

**B1**

(12) **FASCICULE DE BREVET EUROPEEN**

(45) Date de publication du fascicule du brevet: **11.05.88**

(51) Int. Cl.⁴: **H 02 H 7/085,** H 02 P 7/638

(21) Numéro de dépôt: **84402606.2**

(22) Date de dépôt: **14.12.84**

(54) Dipositif de protection d'un moteur électrique.

(30) Priorité: **16.12.83 FR 8320196**

(43) Date de publication de la demande:
**26.06.85 Bulletin 85/26**

(45) Mention de la délivrance du brevet:
**11.05.88 Bulletin 88/19**

(84) Etats contractants désignés:
**DE FR GB IT**

(56) Documents cités:
**DE-A-3 224 366**
**FR-A-2 352 424**
**FR-A-2 352 434**

**ELEKTRONIK, vol. 23, no. 4, février 1979, pages
69-72, DE; F. SCHMEISSER: "Überstrom-
Schutz und Drehzahleinstellung bei
Permanentmagnet-Motoren in
Haushaltsmaschinen"**

**TOUTE L'ELECTRONIQUE, no. 466,
aou7t/septembre 1981, pages 75-78; J.
BRARDO: "Variateur de vitesse commande de
triac en proportionnel"**

(73) Titulaire: **L'UNITE HERMETIQUE S.A.
Route de Lyon
F-38290 La Verpilliere (FR)**

(72) Inventeur: **Lafore, Dominique
THOMSON-CSF SPI 173, bld Haussmann
F-75379 Paris Cedex 08 (FR)**
Inventeur: **Capolino, Gabriel
THOMSON-CSF SPI 173, bld Haussmann
F-75379 Paris Cedex 08 (FR)**
Inventeur: **Champier, Bernard
THOMSON-CSF SPI 173, bld Haussmann
F-75379 Paris Cedex 08 (FR)**

(74) Mandataire: **Grynwald, Albert et al
THOMSON-CSF SCPI 19, avenue de Messine
F-75008 Paris (FR)**

Courier Press, Leamington Spa, England.

## Description

L'invention est relative à un dispositif de protection d'un moteur électrique tel qu' indiqué plans le préamble de la revendication 1.

Elle peut être mise en oeuvre pour différents moteurs, mais plus particulièrement sur les moteurs asynchrones d'entraînement monophasés. De tels moteurs sont utilisés, par exemple, pour l'entraînement des groupes compresseurs des systèmes de pompes à chaleur.

Il est connu, avec de tels moteurs, que le courant d'alimentation est d'autant plus élevé que la vitesse de rotation réelle est réduite par rapport à la vitesse de rotation nominale. C'est le cas, particulièrement, lors du démarrage du moteur où l'on observe couramment que le courant de démarrage atteint une valeur supérieure de trois à cinq fois à la valeur nominale.

Un tel phénomène présente des inconvénients: Il est possible que le moteur puisse résister à une surcharge temporaire, mais dans le cas d'une surcharge de durée prolongée, une détérioration des bobinages du moteur survient. Le réseau d'alimentation peut également être détérioré par une telle surcharge. Il est possible également que, bien que la phase de démarrage soit achevée, le moteur ne soit pas à sa vitesse de rotation nominale; un tel phénomène peut arriver lorsque la charge entraînée par le moteur varie au cours du fonctionnement du moteur: si cette charge varie dans un sens croissant, le couple résistant augmente, la vitesse de rotation diminue et le courant augmente.

Dans l'art antérieur, on a proposé des dispositifs de protection des moteurs électriques. Ces différents dispositifs ne fonctionnent que pendant la phase de démarrage.

Dans un premier type, la vitesse de rotation est mesurée, et tant qu'elle n'atteint pas la valeur nominale, on dispose, dans le circuit électrique d'alimentation, des moyens de réduction du courant d'alimentation du moteur. Lorsque la phase de démarrage est terminée, les moyens de limitation du courant sont mis hors circuit.

Dans un exemple particulier de dispositif de protection de ce type, pendant la phase de démarrage, une résistance supplémentaire est introduire en série avec l'enroulement de phase principal et est court-circuitée lorsque cette phase de démarrage est terminée.

Dans un second dispositif de protection, une résistance supplémentaire est mise en série avec l'enroulement de phase principal pendant une durée donnée, grâce à un relais temporisé. A la fin de la temporisation, dont la durée correspond à une durée calculée de la phase de démarrage, la résistance supplémentaire est mise hors circuit.

Mais l'inconvénient majeur est que ces dispositifs ne fonctionnent que pendant la phase de démarrage.

Lorsque la fin du démarrage a été détectée, dans le premier exemple des dispositifs limiteurs, le dispositif de limitation est mis hors circuit et ne pourra être remis en circuit que lors d'un nouveau démarrage. Ceci signifie que si pendant la phase de fonctionnement la vitesse se réduit, le courant d'alimentation augmente, et il peut survenir une surcharge temporaire risquant de détériorer le moteur ou bien encore de déclencher les systèmes de disjonction du réseau d'alimentation.

Le dispositif à temporisation présente un inconvénient supplémentaire: si la phase de démarrage se prolonge au-delà de la durée de temporisation préréglée, c'est-à-dire se le moteur n'a pas atteint sa vitesse nominale de rotation, une surcharge survient, et le moteur est détérioré.

Le document FR—A—2 352 424 décrit un dispositif de limitation du courant traversant un moteur fonctionnant à tous moments. Il présente l'inconvénient d'utiliser un circuit de mesure de courant réel dans le moteur qui est relié à un circuit de commande d'un interrupteur placé en série avec les enroulements du moteur.

Le dispositif de protection du moteur selon l'invention ne présente pas ces inconvénients.

Selon l'invention, un dispositif de protection d'un moteur électrique alimenté en courant alternatif, possédant un enroulement principal et un enroulement auxiliaire est caractérisé en ce qu'il comporte des moyens de mesure du courant traversant l'enroulement principal; un circuit de mise en forme pour l'élaboration d'un signal proportionnel à la fondamentale du courant traversant l'enroulement principal, un comparateur dont une entrée est reliée à la sortie dudit circuit de mise en forme et dont l'autre entrée reçoit un signal de consigne, en ce que la sortie du comparateur délivre un signal d'erreur appliqué à l'entrée de moyens de commande d'un interrupteur placé en série avec l'enroulement principal, et en ce que les moyens de commande entraînent la conduction dudit interrupteur pendant un temps fonction de l'erreur de façon à limiter en permanence le courant traversant l'enroulement principal du moteur à une valeur prédéterminée.

Un tel dispositif est donc particulièrement avantageux par rapport à ceux précédemment décrits, car il détermine par avance pendant toute la durée de fonctionnement du moteur, le courant qui traverserait l'enroulement sans limitation et élabore par avance le signal de commande de l'interrupteur. Il évite donc la disjonction ou la détérioration du réseau d'alimentation, et la détérioration des bobinages du moteur.

D'autres avantages de la présente invention apparaîtront avec la description d'un mode de réalisation d'un dispositif de protection selon l'invention faite en regard des figures 1 à 5 ci-annexées dans lesquelles:

—la figure 1 est un schéma général du dispositif de protection mis en oeuvre sur un moteur,

—la figure 2 est un synoptique d'un mode particulier de réalisation du dispositif,

—la figure 3 est un schéma plus détaillé du mode de réalisation du dispositif de la figure 2,

—la figure 4 représente une partie du mode particulier de réalisation de l'invention,

—la figure 5 montre les courbes de différents signaux engendrés et/ou utilisés par divers éléments du dispositif selon l'invention.

Selon l'invention, un dispositif de protection d'un moteur comporte un ensemble 1 destiné à mesurer le courant d'alimentation et à commander au moins un moyen 2 de limitation du courant, afin que ce courant ne dépasse pas une certaine valeur, quelle que soit la phase de fonctionnement du moteur.

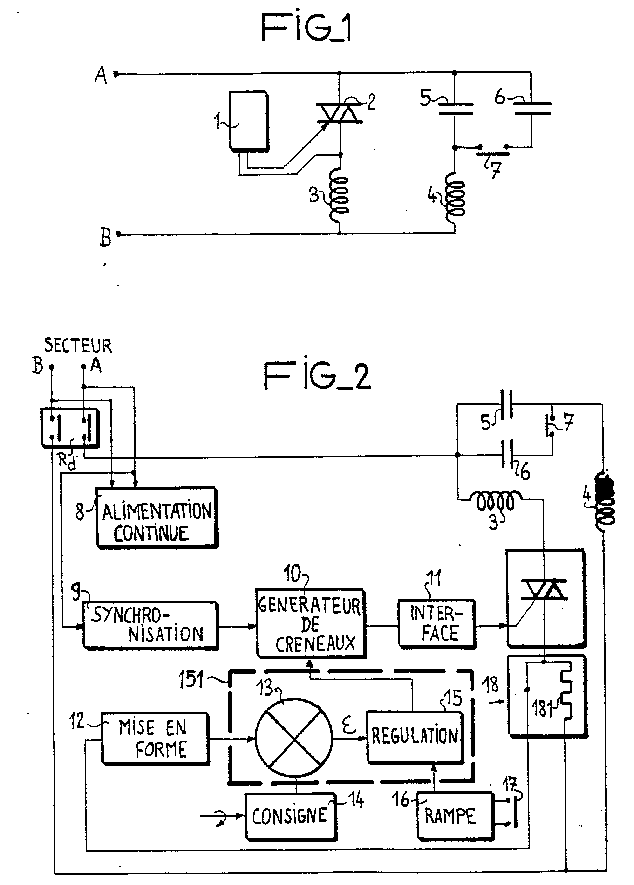

Dans un mode de réalisation préféré de l'invention dont le principe est représenté à la figure 1, l'ensemble 1 mesure le courant traversant l'enroulement 3 principal du moteur, et commande le moyen 2 de limitation du courant traversant cet enroulement principal.

L'enroulement 3 principal est en série avec le moyen de limitation 2, et cet ensemble 2, 3 est relié au réseau d'alimentation par deux bornes A et B.

Un enroulement 4 auxiliaire est, d'autre part, en série avec un condensateur 5. Cette série 4, 5 est reliée aux bornes A et B du réseau et est donc en parallèle avec l'enroulement 3 principal et le moyen 2 de limitation.

Egalement, le condensateur 5 peut être mis, de manière temporaire, en parallèle avec un condensateur 6, notamment lors des démarrages du moteur grâce à l'ouverture ou à la fermeture d'un contact 7 mis en série avec le condensateur 6.

Un moteur du type de celui utilisé avec le dispositif de limitation du courant selon l'invention est alimenté en courant alternatif, et est sensible à la valeur efficace de ce courant. L'invention découle de cette observation et la protection du moteur s'effectue par une limitation de la valeur efficace du courant.

Pour limiter la valeur efficace du courant le dispositif réalise un découpage du courant. Pour celu, le moyen 2 de limitation utilisé est un interrupteur commandé. Le rôle de l'ensemble 1 est donc de fermer l'interrupteur 2 de manière telle que la valeur efficace du courant distribué à l'enroulement 3 principal ne dépasse pas une valeur prédéterminée.

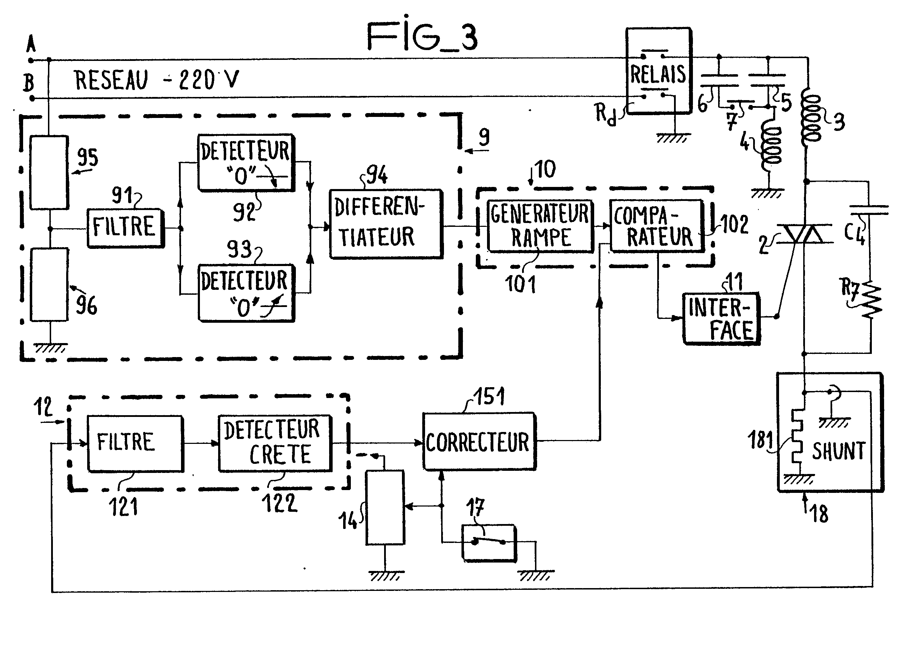

Les figures 2 et 3 montrent d'une manière plus précise un mode de réalisation du dispositif selon l'invention.

L'interrupteur 2 commandé par le dispositif 1 est placé en série avec l'enroulement 3 principal de manière que sa fermeture ou son ouverture permette le passage du courant d'alimentation ou non. Une fraction du courant passant dans l'enroulement 3 principal est prélevée grâce à un shunt 18. Le courant est prélevé aux bornes d'une résistance 181 de faible valeur (de l'ordre de quelques centièmes d'ohms). La mesure est faite à partir de ce courant prélevé qui est proportionnel au courant réel passant dans l'enroulement 3 principal.

Cette fraction de courant est transmise à un circuit 12 de mise en forme dont le but est d'évaluer la valeur efficace du courant qui traverserait l'enroulement principal s'il n'y avait pas découpage. Le circuit 12 de mise en forme possède un filtre 121 passe-bande qui permet d'extraire la fondamentale du courant prélevé (figure 3). En effet, la fondamentale du courant prélevé et injecté dans le filtre 121 est proportionnelle à la fondamentale du courant passant dans l'enroulement 3 principal. Or la fondamentale du courant dans l'enroulement 3 principal est le signal qui parcourerait cet enroulement sans limitation: la valeur efficace de la fondamentale dans l'enroulement 3 principal est donc la valeur efficace du courant qui passerait s'il n'y avait par l'interrupteur commandé. La fondamentale du courant prélevé extraite du filtre 121 est donc proportionnelle à la valeur efficace du courant qui passerait dans l'enroulement 3 principal sans limitation. Il en est de même de la valeur crête de ce signal extrait du filtre 121.

Le circuit 12 de mise en forme comporte en outre, en sortie du filtre 121, un circuit 122 détecteur de crête qui engendre une tension continue proportionnelle à la valeur crête du signal de sortie du filtre 121.

Le dispositif 1 commande le moyen 2 de limitation du courant afin que la valeur efficace du courant traversant l'enroulement 3 principal ne dépasse pas une valeur donnée: le courant doit être découpé quand la valeur efficace du fondamental dans l'enroulement 3 dépasse la valeur limite. Le dispositif 1 comprend, pour cela, un moyen 13 de comparaison de la tension issu du détecteur 122 de crête et d'une valeur de consigne donnée par un moyen 14 (figure 2).

Dans un mode particulier de réalisation la consigne est donnée, de façon connue, par le curseur d'un potentiomètre 14 (figure 3). Le comparateur 13 émet un signal ε d'erreur (différençe entre la consigne et la mesure). Ce signal ε est injecté dans un circuit 15 de régulation qui fournit une tension continue proportionnelle à l'erreur pendant tout le fonctionnement du moteur, et qui permet également le démarrage du moteur comme il est expliqué ultérieurement.

En outre, ce circuit 15 de régulation permet par une action dérivée, de rattraper les retards entraînés par la présence du circuit 12 de mise en forme. Ce circuit 15 de régulation permet encore la suppression des oscillations crées par le circuit 122 détecteur de crête. L'ensemble formé par le circuit 13 comparateur et le circuit 15 de régulation forme un circuit 151 appelé correcteur (figure 3).

Le circuit 12 de mise en forme utilise chaque demi-alternance du courant traversant l'enroulement 3 principal. Afin que le moyen 2 de limitation du courant soit commandé à chaque demi-alternance, le dispositif de mesure et de commande comporte également un circuit 9 de synchronisation avec le réseau d'alimentation, destiné à produire des impulsions à chaque passage à zéro du courant du réseau d'alimentation. Le circuit 9 de synchronisation (figure 3) comporte des moyens 95, 96 pour prélever une partie du signal émis par le réseau. Ces moyens 95, 96 sont par exemple des résistances formant un pont diviseur entre une phase du réseau et la masse. Le signal utilisé pour engendrer les impulsions de synchronisation est pris au point milieau entre ces résistances. Le signal prélevé est tout d'abord filtré à l'aide d'un filtre 91 dont le but est de supprimer les impulsions parasites pouvant circuler sur le réseau. Le signal alors issu du filtre 91 est, dans le mode particulier de réalisation de l'invention, transmis à deux détecteurs 92 et 93 de zéro. L'un de ces détecteurs, par exemple le 92, a pour but de détecter les passages à zéro à la suite d'une alternance positive; le second détecteur 93 a dans ce cas, pour but de détecter le passage à zéro à la suite d'une alternance négative. Les signaux émis par ces détecteurs sont transmit ensuite à un circuit différentiateur 94 dont le rôle est d'engendrer une impulsion de synchronisation à chaque passage par zéro du signal issu du réseau.

Sur la figure 5, on a représenté divers signaux ou impulsions émis par des éléments du dispositif selon l'invention.

La courbe a représente le signal d'alimentation. La courbe b représente les impulsions émises à la sortie du différentiateur 94, en synchronisme avec les passages par zéro du signal a.

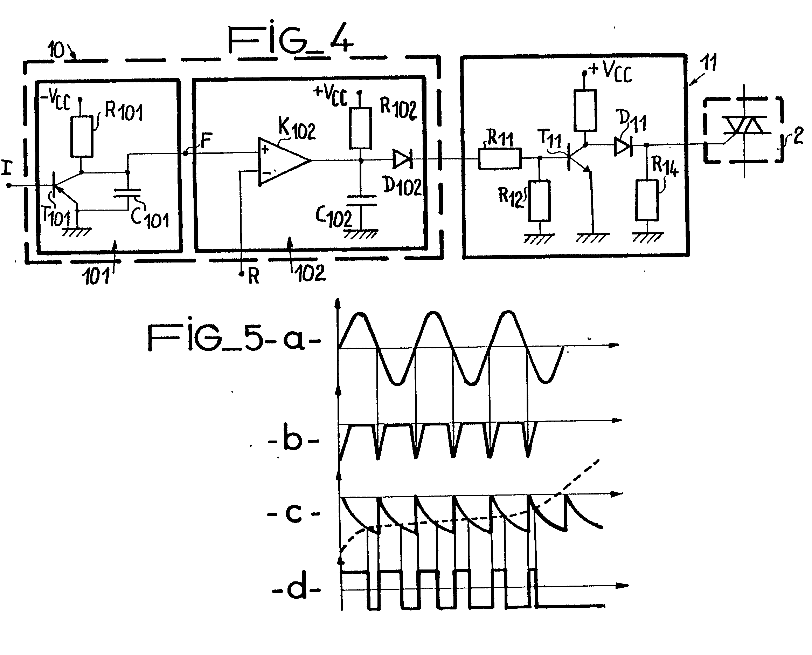

Ces impulsions sont ensuite transmises à un générateur 10 de créneaux (figure 2) comportant un générateur 101 de rampe et un comparateur 102 (figure 3) dont le schéma complet est représenté à la figure 4.

Le générateur 101 de rampe a pour rôle d'engendrer la rampe représentée en trait plein sur la partie c de la figure 5. Cette rampe est transmise sur une entrée du comparateur 102. Le comparateur 102 reçoit d'autre part le signal, représenté en trait interrompu sur la partie ce de la figure 5, émis par le correcteur 151, ce signal étant directement proportionnel au résultat de la mesure effectuée par le circuit 12 de mise en forme, et il engendre alors les impulsions représentées à la partie d de la figure 5. La durée de ces impulsions détermine la durée de conduction à travers l'enroulement 3 principal. On constate que le résultat souhaité est atteint puisque le temps de conduction est d'autant plus faible que la valeur efficace de la fondamentale du courant est élevée.

Dans un mode préféré de réalisation du dispositif de limitation du courant selon l'invention, les différents circuits précédemment étudiés sont réalisés d'une manière classique à l'aide d'amplificateurs opérationnels. Il en est de même du circuit générateur 10 de créneaux. Le moyen 2 de limitation nécessite une certaine puissance pour son pilotage, et il est donc nécessaire de prévoir un circuit 11 d'interface en sortie du comparateur 102 du générateur 10 de créneaux.

Dans un mode de réalisation de l'invention, le correcteur 151 délivre une tension pouvant être négative ou positive (partie c en trait interrompu de la figure 5). Cette tension est d'autant moins négative que la valeur efficace de la fondamentale du ant passant par l'enroulement 3 diminue.

Le différentiateur 94 du circuit 9 de synchronisation produit à chaque passage à zéro de la tension d'alimentation issu du réseau une impulsion du type de celles représentées sur la partie b de la figure 5. Ces impulsions sont, dans le mode de réalisation décrit, négatives.

Ces impulsions servent à engendrer une rampe en dents de scie (figure 5, partie c, trait plein). Pour cela, la sortie du différentiateur est reliée à l'entrée I du générateur 101 de rampe (figure 4). Ce générateur est constitué d'un transistor $T_{101}$ du type PNP dont la base constitue l'entrée I. L'émetteur est relié à la masse et le collecteur est relié à une source de tension négative par l'intermédiaire d'une résistance $R_{101}$. Un condensateur $C_{101}$ est branché entre l'émetteur et le collecteur.

Lorsqu'aucune tension n'est appliquée sur la base du transistor $T_{101}$, celui-ci est bloqué, et, le condensateur $C_{101}$ se charge par l'intermédiaire de la résistance $R_{101}$. Il apparaît donc une tension négative sur le collecteur.

Lorsqu'une impulsion négative apparaît en I, le transistor conduit et le condensateur se décharge brusquement, car le collecteur se trouve alors relié à la masse.

Si un train d'impulsions est fourni à la base, une tension négative en dents de scie est engendrée sur le collecteur (figure 5, partie c, trait plein).

Le collecteur est également relié à l'entrée F d'un circuit 102 comparateur comportant notamment, dans le mode de réalisation décrit, un amplificateur $K_{102}$ opérationnel. L'entrée F est directement connectée à l'entrée + non inverseuse de l'amplificateur opérationnel. Donc, c'est le signal en dents de scie qui est transmis à cette entrée.

L'entrée inverseuse de l'amplificateur $K_{102}$ opérationnel est reliée à la sortie du correcteur 151.

La sortie de l'amplificateur opérationnel est reliée au potentiel + $V_{cc}$ positif d'alimentation, par l'intermédiaire d'une résistance $R_{102}$. La sortie est également reliée à la masse par l'intermédiaire d'un condensateur $C_{102}$. Cette sortie est en outre reliée à l'anode d'une diode $D_{102}$. La cathode de la diode $D_{102}$ est reliée, par l'intermédiaire du circuit 11 interface au moyen 2 de limitation. Ceci permet d'adapter la puissance de sortie de l'amplificateur opérationnel à l'entrée de ce moyen 2.

Une résistance $R_{11}$ du circuit 11 interface est reliée par une borne à la cathode de la diode $D_{102}$. Son autre borne est reliée à la base d'un transistor $T_{11}$ du type NPN, ainsi qu'à une borne d'une résistance $R_{12}$. La seconde borne de la résistance $R_{12}$ est reliée à la masse. Ces deux résistances forment un pont diviseur entre la tension de cathode et la masse.

Dans un mode de réalisation préféré, le moyen 2 de limitation est un triac; dans ce cas l'émetteur du transistor est relié à la masse. Le collecteur est relié à un potentiel + $V_{cc}$ positif par l'intermédiaire d'une résistance $R_{13}$. Il est, d'autre part, relié à l'anode d'une diode $D_{11}$ dont la cathode est reliée à la gâchette du triac 2.

La cathode est également reliée à la masse par l'intermédiaire d'une résistance $R_{14}$ qui permet une limitation du courant de gâchette.

Le fonctionnement de cette partie du dispositif est le suivant: lorsqu'aucune tension n'est appliqué à la base du transistor $T_{11}$, celui-ci est bloqué, et un courant s'établit alors dans la diode $D_{11}$, puisque son anode se trouve à un potentiel supérieur à celui de sa cathode. Le triac est alors mis en conduction par un courant posisitif appliqué sur sa gâchette.

Lorsqu'une tension est appliquée sur la base du transistor $T_{11}$, celui-ci conduit et le collecteur est alors mis à la masse. La diode $D_{11}$ empêche tout passage de courant sur la gâchette du triac et celui-ci ne conduit dont pas.

D'une manière classique, le triac est protégé contre les variations de tension à l'aide d'un condensateur $C_4$ en série avec une résistance $R_7$, la série étant mise en parallèle sur le triac 2 (figure 3).

Le triac 2 doit avoir une conduction permanente si la valeur efficace du courant ne dépasse pas la valeur souhaitée et doit découper le courant si la valeur efficace de la fondamentale est supérieure à la valeur souhaitée, de façon à ce que le courant réellement distribué air une valeur efficace au plus égale à la valeur maximum souhaitée.

Or le correcteur 151 délivre une tension continue proportionnelle à la valeur efficace de la fondamentale du courant distribué. Plus cette fondamentale est élevée, plus le temps de conduction doit être restreint.

Le mode de réalisation décrit permet d'aboutir à ce résultat.

Le triac est mis en conduction lorsqu'aucune tension n'est appliquée à la base du transistor $T_{11}$ de l'interface 11. C'est le cas lorsque la tension de sortie de l'amplificateur $K_{102}$ opérationnel est négative ou nulle, car dans ce cas, la diode $D_{102}$ ne conduit pas. Lorsque la tension de sortie dudit amplificateur $K_{102}$ opérationnel est positive, la diode $D_{102}$ conduit, et à la base du transistor $T_{11}$ est appliquée une tension positive dont la valeur est fonction du pont diviseur réalisé par les résistances $R_{11}$ et $R_{12}$, et de la tension de la cathode de la diode $D_{102}$.

La tension de sortie de l'amplificateur opérationnel est négative lorsque la tension appliquée sur sont entrée − inverseuse est supérieure à la tension appliquée sur son entrée + non inverseuse; elle est donc positive dans le cas contraire.

Dans le montage tel que réalisé, la tension de sortie est négative lorsque la tension issue du correcteur est supérieure à la tension issue du générateur de dents de scie.

Les parties c et d de la figure 5 montrent respectivement une possibilité de positions relatives de la tension issue du correcteur (trait interrompu) par rapport à la dent de scie et la sortie de l'amplificateur opérationnel dans ce cas.

Les impulsions négatives de la courbe d correspondant dans ce cas, aux temps de conduction du triac 2.

Le triac est en conduction lorsque la tension issue du correcteur est supérieure à la tension en dents de scie; dès lors que la tension issue du correcteur devient inférieure à la tension du générateur de dents de scie, il n'y a plus de conduction et, si la tension issue du correcteur est comprise dans les limites de la tension en dents de scie, la conduction est partielle.

Ainsi, dans le mode de réalisation, il suffit de dimensioner le correcteur pour que sa tension de sortie soit d'autant plus négative que la valeur efficace de la fondamental du courant traversant l'enroulement 3 principal est élevée, pour que cette tension de sortie devienne nulle ou positive lorsque la valeur efficace du courant total devienne égale ou inférieure à la valeur maximale souhaitée, afin de permettre une condution totale du triac.

Un tel dispositif permet donc une régulation du courant traversant l'enroulement principal à partir de la mesure effectuée sur la fondamentale du courant.

Le mode de réalisation décrit présente un dispositif dont certains composants tels que amplificateurs opérationnels, transistors nécessitent une alimentation en courant continu. Le dispositif comporte en outre, dans ce but, une alimentation 8 (figure 2) délivrant des tensions $+V_{CC}$ et $−V_{CC}$ continues positive et négative, à partir d'une transformation de la tension alternative distribuée par le réseau.

Sur les figures 2 et 3, on a représenté les contacts d'un relais $R_d$. Le relais $R_d$ est activé et lesdits contacts le ferment à la suite d'une action sur l'interrupteur 17 de mise en route, ce qui entraîne l'arrivée du courant du réseau sur le dispositif de limitation et aux bornes du moteur.

En outre, l'action sur l'interrupteur 17 a pour effet de fermer le contact 7 de mise en circuit du condensateur 6 de démarrage précédemment décrit.

Le contact 7 est ouvert, et le condensateur 6 est mis hors circuit quand la fin de la phase de démarrage est détectée, lorsque le moteur a atteint sa vitesse nominale. Cette détection se fait de façon classique par mesure de la vitesse ou par mesure de la force contre-électromotrice du moteur.

Egalement selon l'invention, le dispositif de limitation comporte un moyen 16 permettant le démarrage avec un courant faible. Ce moyen est mis en oeuvre au moment de la fermeture de l'interrupteur 17 de mise en route de l'ensemble moteur, le correcteur 151 délivre une tension évitant que le triac 2 soit en conduction permanente et qu'ainsi le courant soit trop élevé. Dans le mode de réalisation décrit, le moyen 16 est un générateur de rampe croissante qui, dès l'action sur l'interrupteur 17, délivre une tension inférieure à la tension minimum de la dent de scie du premier générateur 101 de rampe (figure 5, partie c). Ainsi le triac ne conduit pas. La rampe croît façon telle que le premier temps de conduction soit très faible. Ensuite, le circuit 12 de mise en forme intervient comme précédemment décrit, et le reste du dispositif entre en fonctionnement.

Dans un mode préféré de réalisation, la rampe est engendrée par un circuit intégrateur dont la constante du temps est telle que l'intersection avec la courbe en dents de scie se fasse à une valeur supérieure mais proche de la valeur minimum de cette dent de scie.

Le dispositif permet donc une limitation du courant d'alimentation pendant toute la durée du fonctionnement du moteur, et permet un démarrage avec un courant de dépassant pas la valeur maximum souhaitée. Il permet donc une protection permanente du moteur, et évite également la détérioration du réseau d'alimentation.

**Revendications**

1. Dispositif de protection d'un moteur électrique alimenté en courant alternatif, possédant un enroulement principal (3) et un enroulement auxiliaire (4), caractérisé en ce qu'il comporte des moyens de mesure (18) du courant traversant l'enroulement principal (3), un circuit circuit (12) de mise en forme pour l'élaboration d'un signal proportionnel à la fondamentale du courant traversant l'enroulement principal (3), un comparateur (13) dont une entrée est reliée à la sortie dudit circuit (12) de mise en forme et dont l'autre entrée reçoit un signal de consigne, en ce que la sortie du comparateur (13) délivre un signal d'erreur (ε) appliqué à l'entrée de moyens de commande (10) d'un interrupteur (2) placé en série avec l'enroulement principal et en ce que les moyens de commande (10) entraînent la conduction dudit interrupteur pendant un temps fonction de l'erreur (ε) de façon à limiter en permanence le courant traversant l'enroulement principal du moteur à une valeur prédéterminée.

2. Dispositif selon la revendication 1, caractérisé en ce les moyens de mesure comprennent un shunt (18) constitué d'une résistance (181) placée en série avec l'enroulement principal (3) pour dériver une fraction du courant traversant l'enroulement principal (3), proportionelle audit courant vers l'entrée du circuit (12) de mise en forme.

3. Dispositif selon la revendication 1, caractérisé en ce que le circuit (12) de mise en forme est constitué par un filtre (121) passe-bas permettant d'extraire un signal proportionnel à la fondamentale du courant traversant l'enroulement principal (3) du moteur et un circuit détecteur de crête (122) délivrant une tension continue proportionnelle à la valeur de crête du signal extrait par le filtre et en ce que le comparateur (13) est agencé pour comparer une valeur de consigne et ladite tension continue, ledit comparateur (13) délivrant à sa sortie un signal d'erreur (ε) proportionnel à l'écart entre la valeur de consigne et ladite tension continue, et en ce que la sortie du comparateur (13) est reliée aux moyens de commande (10) de l'interrupteur (2) placée en série avec l'enroulement principal (3), de sorte que, lorsque la valeur de crête de la fondamentale excède la valeur de consigne l'interrupteur (2) est commandé pour qu'à chaque demi alternance du courant d'alimentation, son temps de conduction, fonction de l'erreur (ε), soit tel que la valeur efficace du courant traversant l'enroulement principal (3) reste inférieure à ladite valeur prédéterminée.

4. Dispositif selon la revendication 1, caractérisé en ce que l'interrupteur commandé (2) en série avec l'enroulement principal (3) est un triac dont la gâchette est reliée à la sortie des moyens de commande (10).

5. Dispositif selon la revendication 1, caractérisé en ce que les moyens de commande (10) de l'interrupteur (2) sont reliés à un circuit (9) de synchronisation comportant des circuits (92, 93) de détection du passage par zéro du courant du réseau, afin qu'un signal de commande soit fourni à l'interrupteur à chaque demi-alternance du courant d'alimentation.

6. Dispositif selon l'une quelconque des revendications précédentes, caractérisé en ce qu'il comporte en outre un circuit (16) permettant aux moyens de commande (10) de délivrer au démarrage un ordre de conduction limité de l'interrupteur (2) afin que dés le début de la phase de démarrage, la valeur efficace du courant ne dépasse pas la valeur maximum prédéterminée.

**Patentansprüche**

1. Schutzeinrichtung für einen Wechselstrommotor, der eine Hauptwicklung (3) und eine Hilfswicklung (4) besitzt, dadurch gekennzeichnet, daß sie Mittel (18) zur Messung des durch die Hauptwicklung (3) fließenden Stromes, einen Formgeberkreis (12) zur Erzeugung eines der Grundwelle des durch die Hauptwicklung (3) fließenden Stromes proportionalen Signals, und einen Komparator (13) aufweist, dessen einer Eingang mit dem Ausgang des Formgeberkreises (12) verbunden ist und dessen anderer Eingang ein Sollsignal empfängt, daß der Ausgang des Komparators (13) ein Fehlersignal (ε) liefert, das an den Eingang von Steuermitteln (10) eines Schalters (2) gelegt ist, der in Reihe mit der Hauptwicklung liegt, und daß die Steuermittel (10) den Schalter während einer vom Fehler (ε) abhängigen Zeitdauer leitend steuern, so daß der die Hauptwicklung des Motors durchfließende Strom ständig auf einen vorbestimmten Wert begrenzt wird.

2. Einrichtung nach Anspruch 1, dadurch gekennzeichnet, daß die Meßmittel einen Nebenschlußwiderstand (18) aufweisen, der aus einem in Reihe mit der Hauptwicklung (3) geschalteten Widerstand (181) besteht und einen Bruchteil des durch die Hauptwicklung (3) fließenden Stroms aufnimmt, wobei dieser Strom proportional zum an den Eingang des Formgeberkreises (12) gelangenden Strom ist.

3. Einrichtung nach Anspruch 1, dadurch gekennzeichnet, daß der Formgeberkreis (12) aus einem Tiefpaßfilter (121), welches ein der Grundwelle des die Hauptwicklung (3) des Motors durchfließenden Stroms proportionales Signal zu entnehmen gestattet, und aus einem Spitzenwertdetektorkreis (122) besteht, welcher eine der Größe des durch das Filter entnommenen Spitzenwerts proportionale Gleichspannung liefert, und daß der Komparator (13) auf den Vergleich eienes Sollwertes mit der Gleichspannung eingestellt ist und an seinem Ausgang ein Fehlersignal

(ε) abgibt, das proportional zum Abstand zwischen dem Sollwert und der Gleichspannung ist, und daß der Ausgang des Komparators (13) mit den Steuermitteln (10) für den Schalter (2) verbunden ist, der in Reihe mit der Hauptwicklung liegt, so daß, wenn der Spitzenwert der Grundwelle den Sollwert überschreitet, der Schalter (2) derart gesteuert wird, daß in jeder Halbperiode des Speisestroms seine vom Fehler (ε) abhängige Stromführungsdauer so bemessen ist, daß der Effektivwert des die Hauptwicklung (3) durchfließenden Stroms unterhalb des vorbestimmten Wertes bleibt.

4. Einrichtung nach Anspruch 1, dadurch gekennzeichnet, daß der in Reihe mit der Hauptwicklung (3) liegende gesteuerte Schalter (2) ein Triac ist, dessen Steuerelektrode mit dem Ausgang der Steuermittel (10) verbunden ist.

5. Einrichtung nach Anspruch 1, dadurch gekennzeichnet, daß die Steuermittel (10) für den Schalter (2) an einen Synchronisationskreis (9) angeschlossen sind, der Schaltkreise (92, 93) zur Feststellung des Nulldurchgangs des Netzstromes aufweist, damit ein Steuersignal bei jeder Halbperiode des Speisestroms an den Schalter geliefert wird.

6. Einrichtung nach einem der vorhergehenden Ansprüche, dadurch gekennzeichnet, daß er auch einen Schaltkreis (16) aufweist, der den Steuermitteln (10) erlaubt, beim Start einen begrenzten Stromführungsbefehl für den Schalter (2) zu liefern, damit gleich zu Beginn der Startphase der Effektivwert des Stromes nicht den vorbestimmten Maximalwert übersteigt.

**Claims**

1. A protective device for an electrical AC motor provided with a principal winding (3) and an auxiliary winding (4), characterized in that it comprises means (18) for measuring the current passing through the principal winding (3), a shaping circuit (12) for the generation of a signal proportional to the fundamental wave of the current passing through the principal winding (3), a comparator (13), one input of which is connected to the output of the shaping circuit (12), whereas the other input receives a set signal, that the output of the comparator (13) supplies an error signal (ε) applied to the input of control means (10) of an interruptor (2) connected in series with the principal winding, and that the control means (10) render the interruptor conductive during a time period depending upon the error (ε), so that the current passing through the principal winding of the motor is permanently limited to a predetermined value.

2. A device according to claim 1, characterized in that the measuring means comprise a shunt (18) consisting of a resistor (181) mounted in series with the principal winding (3) for deriving a fraction of the current passing through the principal winding (3), fraction which is proportional to said current flowing to the input of the shaping circuit (12).

3. A device according to claim 1, characterized in that the form shaping circuit (12) consists of a low-pass filter (121) allowing a signal to be extracted, which is proportional to the fundamental wave of the current passing through the principal winding (3) of the motor, and of a peak detection circuit (122), which supplies a DC voltage proportional to the value of the signal peak extracted by the filter, and that the comparator (13) is adapted to compare a set value with said DC voltage and deliver at its output an error signal (ε) that is proportional to the difference between the set value and the DC voltage, and that comparator (13) output is connected to the control means (10) of the interruptor (2) which is mounted in series with the principal winding (3), so that, when the peak value of the fundamental wave exceeds the set value, the interruptor (2) is acted upon in order to ensure that, at each half cycle of the feed current, its conduction time period which depends upon the error (ε), is such that the r.m.s. value of the current passing through the principal winding (3) remains below the said predetermined value.

4. A device according to claim 1, characterized in that the controlled interruptor (2) in series with the principal winding (3) is a triac, the gate of which is connected to the output of the control means (10).

5. A device according to claim 1, characterized in that the control means (10) of the interruptor (2) are connected to a synchronizing circuit (9) comprising circuits (92, 93) for detecting the zero-cross-over of the mains current, so that a control signal is sent to the interruptor at each half cycle of the feed current.

6. A device according to one of the preceding claims, characterized in that it comprises also a circuit (16) enabling the control means (10) to deliver at the start a limited order for rendering the interruptor (2) conductive, so that, as soon as the starting phase begins, the r.m.s. value of the current does not exceed the predetermined maximum value.

# FIG_1

# FIG_2

# FIG_3

# FIG_4

# FIG_5

- a -
- b -
- c -
- d -

0 146 475